# EUROPÄISCHE PATENTANMELDUNG

(11) **EP 2 664 411 A2**
(43) Veröffentlichungstag der Anmeldung: **20.11.2013**
(21) Anmeldenummer: 13167698.3
(22) Anmeldetag: 14.05.2013
(51) Int. Cl.: B23K 37/02, B23K 9/32

(54) **Tragbare Schweißvorrichtung**

(30) Priorität: 15.05.2012 DE 102012104226
(71) Anmelder: Decker Steuerungs- u. Regelungsanlagen GmbH, 59929 Brilon-Madfeld (DE)
(72) Erfinder: Decker, Marcel, 59929 Brilon (DE)
(74) Vertreter: Manske, Jörg

(57) **Zusammenfassung**

Die Erfindung bezieht sich auf eine tragbare Schwei ßvorrichtung (1), umfassend
- ein Gehäuse (2),
- eine Schweißeinheit, die innerhalb des Gehäuses (2) untergebracht ist,
- ein erstes Schweißkabel (3a) und ein zweites Schweißkabel (3b), die mit der Schweißeinheit verbunden oder manuell lösbar verbindbar sind, wobei an dem ersten Schweißkabel (3a) ein Elektrodenhaltemittel (4) zum Halten einer Schweißelektrode angebracht ist und an dem zweiten Schweißkabel (3b) ein Masseanschlussmittel (5), insbesondere eine Masseverbindungszange, angebracht ist,
- Anschlussmittel zum Anschluss der Schweißeinheit an eine Stromversorgungseinrichtung und/oder an ein Stromnetz,
- einen ersten Schultertragriemen (6a), der an zwei voneinander beabstandeten Anbindungspunkten mit dem Gehäuse (2) verbunden ist, sowie
- einen zweiten Schultertragriemen (6b), der an zwei voneinander beabstandeten Anbindungspunkten mit dem Gehäuse (2) verbunden ist.

## Beschreibung

Die vorliegende Erfindung bezieht sich auf eine tragbare Schweißvorrichtung.

Tragbare Schweißvorrichtungen, die für die Durchführung eines Lichtbogenschweißverfahrens eingerichtet sind und zum Beispiel für einen mobilen Einsatz auf Baustellen konzipiert sind, sind aus dem Stand der Technik in verschiedenen Ausführungsformen bereits bekannt. Grundsätzlich ist es auch bekannt, einen Tragriemen an der Schweißeinheit anzubringen, damit der Nutzer die Schweißvorrichtung über eine seiner Schultern hängen kann. Dies dient allerdings ausschließlich dem Transport der Schweißvorrichtung von einem Arbeitsort zum anderen. Unter Arbeitsschutz- und Sicherheitsaspekten sollte mit der Schweißeinheit über der Schulter nicht gearbeitet werden, da insbesondere die Gefahr des Abrutschens des Tragriemens von der Schulter des Benutzers besteht und der Nutzer intuitiv mit einer Hand nach dem Tragriemen greifen wird, um dadurch einen Sturz der Schweißeinheit auf den Boden zu vermeiden. Während der Durchführung des Schweißprozesses kann es unter Umständen zu gefährlichen Situationen kommen, die schlimmstenfalls Unfälle zur Folge haben können. Überdies führt die Verwendung eines einzelnen Tragriemens zu einer einseitigen Belastung des Körpers und ist somit unter ergonomischen Gesichtspunkten als ungünstig anzusehen.

Um mit den aus dem Stand der Technik bekannten tragbaren Schweißvorrichtungen arbeiten zu können, müssen zahlreiche (und damit auch zeitaufwändige) Arbeitsvorbereitungen getroffen werden. Zunächst muss zum Beispiel ein geeigneter Aufstellort für die Schweißeinheit der tragbaren Schweißvorrichtung gefunden werden. Anschließend werden die für das Schweißen notwendigen Zubehörteile an die Schweißeinheit angeschlossen. Dazu zählen insbesondere zwei Schweißkabel, von denen eines ein Masseanschlussmittel, insbesondere eine Massezange oder Masseklemme, und das andere ein Elektrodenhaltemittel zum Halten einer Schweißelektrode aufweist. Anschließend wird ein Stecker eines elektrischen Anschlusskabels der Schweißeinheit - häufig unter Verwendung eines Verlängerungskabels - an eine Netzsteckdose angeschlossen. Dementsprechend hoch ist der Zeitaufwand für die Inbetriebnahme der aus dem Stand der Technik bekannten tragbaren Schweißvorrichtungen. Weitere Nachteile derartiger Schweißvorrichtungen bestehen darin, dass sie einen vergleichsweise geringen Arbeitsradius haben. So sind herkömmliche tragbare Schweißvorrichtungen derzeit mit Schweißkabeln, die jeweils etwa 3m lang sind, und mit einer etwa 1 m langen elektrischen Anschlussleitung ausgerüstet. Der Einsatz einer herkömmlichen Schweißvorrichtung als mobiles Gerät ist bei der derzeitigen Bauweise nicht zweckmäßig, da der Nutzer gleichzeitig zwei etwa 3m Schweißkabel sowie ein Verlängerungskabel und die Anschlussleitung mitführen müsste, was insbesondere unter ergonomischen Aspekten unpraktikabel ist, da sich die Kabel ineinander verschlingen können und nach dem Abschluss der Schweißarbeiten mühsam entwirrt werden müssen.

Um bei einer herkömmlichen Schweißvorrichtung den Arbeitsradius zu erhöhen, könnte man zum Beispiel mit längeren Schweißkabeln arbeiten, da das Mitführen der aus dem Stand der Technik bekannten Schweißvorrichtung - wie im vorherigen Abschnitt bereits erläutert - unzweckmäßig und damit nachteilig ist. Aber auch dieses Vorgehen wäre mit Nachteilen verbunden. Wenn sich der Nutzer zum Beispiel mit den beiden Schweißkabeln vom Standort seiner Schweißeinheit entfernt, um mit dem Schweißprozess zu beginnen und dann feststellt, dass zum Beispiel die Stromstärke an der Schweißeinheit nicht optimal eingestellt ist, muss er sich wieder zur Schweißeinheit begeben, um die Stromstärke nachzujustieren. Darüber hinaus bergen relativ lange Schweißkabel auch Stolpergefahren.

Hier setzt die vorliegende Erfindung an und macht es sich zur Aufgabe, eine tragbare Schweißvorrichtung der eingangs genannten Art zur Verfügung zu stellen, die einen großen Arbeitsradius bietet und einfacher und sicherer in der Handhabung als die bekannten tragbaren Schweißvorrichtungen ist.

Die Lösung dieser Aufgabe liefert eine Schweißvorrichtung mit den Merkmalen des Anspruchs 1. Die Unteransprüche betreffen vorteilhafte Weiterbildungen der Erfindung.

Eine erfindungsgemäße tragbare Schweißvorrichtung umfasst
- ein Gehäuse,
- eine Schweißeinheit, die innerhalb des Gehäuses untergebracht ist,
- ein erstes Schweißkabel und ein zweites Schweißkabel, die mit der Schweißeinheit verbunden oder manuell lösbar verbindbar sind, wobei an dem ersten Schweißkabel ein Elektrodenhaltemittel zum Halten einer Schweißelektrode angebracht ist und an dem zweiten Schweißkabel ein Masseanschlussmittel, insbesondere eine Masseverbindungszange, angebracht ist,
- Anschlussmittel zum Anschluss der Schweißeinheit an eine Stromversorgungseinrichtung und/oder an ein Stromnetz,
- einen ersten Schultertragriemen, der an zwei voneinander beabstandeten Anbindungspunkten mit dem Gehäuse verbunden ist, sowie
- einen zweiten Schultertragriemen, der an zwei voneinander beabstandeten Anbindungspunkten mit dem Gehäuse verbunden ist.

Ein Vorteil der erfindungsgemäßen tragbaren Schweißvorrichtung besteht darin, dass sie gewissermaßen betriebsbereit zur Baustelle transportiert werden kann. Der Nutzer muss keinen geeigneten und in erster Linie sicheren Aufstellort für Schweißeinheit finden. Der Nutzer hat auf jeden Teil der Schweißvorrichtung unmittelbaren Zugriff und kann aus seiner Arbeitsposition heraus zum Beispiel auch Einstellungen an der Schweißvorrichtung vornehmen. Da die beiden Schultertragriemen so ausgebildet und derart am Gehäuse angeordnet sind, dass die Schweißvorrichtung auf beiden Schultern des Nutzers getragen wird, besteht keine Gefahr des unbeabsichtigten Abrutschens von der Schulter des Nutzers, so dass problemlos auch dann geschweißt werden kann, wenn die Schweißvorrichtung von einem Nutzer getragen wird. Das Gehäuse mit den beiden Schultertragriemen kann insbesondere nach Art eines Rucksacks ausgeführt sein. Besonders bei kleinen Reparaturarbeiten oder bei Arbeiten an räumlich relativ weit voneinander entfernten Orten ist die erfindungsgemäße Schweißvorrichtung sehr effektiv einsetzbar. Da die Schweißeinheit nicht mit den Händen getragen werden muss, stehen diese dem Nutzer frei zur Verfügung, so dass er sie einsetzen kann um sich gegebenenfalls zu sichern oder zu schweißende Teile oder andere Gegenstände zu halten beziehungsweise zu transportieren. Mit der erfindungsgemäßen Schweißvorrichtung wird vorzugsweise auf dem Rücken gearbeitet, was insbesondere unter ergonomischen und arbeitsökonomischen Gesichtspunkten gegenüber dem Stand der Technik zahlreiche Vorteile bietet. Zu diesen Vorteilen gehören insbesondere
- kein Suchen nach einer geeigneten Position für die Schweißeinheit vor Beginn der Schweißarbeiten,
- kein aufwändiges Entpacken und Installieren langer Schweißkabel,
- keine Suche nach einer passenden Stelle für den Anschluss des Masseanschlussmittels,
- kein Aufsuchen der an einem entfernten Ort platzierten Schweißeinheit zum Verstellen der Schweißspannung,
- das Masseanschlussmittel ist stets in Reichweite des Nutzers.

Grundsätzlich ist es auch möglich, die erfindungsgemäße Schweißvorrichtung zu betreiben, wenn der Nutzer sie nicht auf seinen Rücken geschnallt hat. Die erfindungsgemäße tragbare Schweißvorrichtung weist alle Eigenschaften einer herkömmlichen, aus dem Stand der Technik bekannten Schweißvorrichtung, die insbesondere nach dem Lichtbogenschweißverfahren arbeiten kann, auf. Ein zusätzlicher Vorteil besteht darin, dass die Schweißvorrichtung schneller einsatzbereit ist und somit die bislang üblichen Rüstzeiten drastisch verkürzt werden können. Je nach Bedienart der tragbaren Schweißvorrichtung kann zudem der Arbeitsradius erheblich vergrößert werden. Der Nutzer behält auch stets den Überblick, ob eine direkte Verbindung zur Masse gegeben ist.

In einer besonders bevorzugten Ausführungsform besteht die Möglichkeit, dass die beiden Schultertragriemen längenverstellbar ausgebildet sind. Dadurch können die Längen der Schultertragriemen auf einfache Weise nutzerspezifisch angepasst werden, so dass die Schweißvorrichtung bequem auf dem Rücken getragen werden kann.

Um die Ergonomie weiter zu verbessern, besteht in einer vorteilhaften Ausführungsform die Möglichkeit, dass die Schweißvorrichtung einen Bauchgurt umfasst, der sich in einem unteren Bereich des Gehäuses quer zu den beiden Schultertragriemen erstreckt und an zwei Anbindungspunkten mit dem Gehäuse verbunden ist. Der Bauchgurt ist dazu in der Lage, den Tragekomfort zu erhöhen und kann vorzugsweise längenverstellbar ausgeführt sein, um eine nutzerspezifische Anpassung der Länge des Bauchgurts und einen sicheren Halt desselben zu bewirken.

In einer besonders vorteilhaften Ausführungsform kann vorgesehen sein, dass an zumindest einem Schultertragriemen, vorzugsweise an jedem der beiden Schultertragriemen, zumindest ein Schweißkabelführungsmittel angebracht ist. Vorzugsweise können die Schweißkabelführungsmittel ösenartig oder hakenartig ausgebildet sein. Auf diese Weise können die beiden an den Schultertragriemen der Schweißvorrichtung angebrachten Schweißkabel bequem mitgeführt werden. Weiterhin ist es besonders vorteilhaft, wenn an jedem der beiden Schultertragriemen zwei voneinander beabstandete Schweißkabelführungsmittel angebracht sind.

Um die Handhabung weiter zu vereinfachen, wird in einer weiteren vorteilhaften Ausführungsform vorgeschlagen, dass am ersten Schultertragriemen ein Befestigungsmittel angebracht ist, an dem das Elektrodenhaltemittel bei einem Nichtgebrauch lösbar befestigbar ist, und/oder dass am zweiten Schultertragriemen ein Befestigungsmittel angebracht ist, an dem das Masseanschlussmittel bei einem Nichtgebrauch lösbar befestigbar ist.

Um einem Nutzer die Bedienung zu erleichtern, kann in einer besonders vorteilhaften Ausführungsform vorgesehen sein, dass die Schweißvorrichtung ein Bedienteil umfasst, das mittels eines Anschlusskabels an die Schweißeinheit angeschlossen ist und mindestens ein Einstellmittel, insbesondere ein Potentiometer, aufweist, vermittels dessen während des Betriebs der Schweißeinheit zumindest ein Betriebsparameter, insbesondere eine Schweißspannung und/oder eine Stromstärke, einstellbar ist. Das Bedienteil, das zum Beispiel ein im Wesentlichen kastenförmiges Gehäuse umfassen kann, kann wahlweise noch weitere Einstellmittel aufweisen, mittels derer weitere Betriebsparameter der Schweißeinheit eingestellt werden können. Des Weiteren kann das Bedienteil zum Beispiel auch ein Schaltermittel umfassen, das so ausgebildet ist, dass die Schweißeinheit durch Betätigen des Schaltermittels ein- beziehungsweise wieder ausgeschaltet werden kann.

Vorzugsweise können die Anschlussmittel ein Stromanschlusskabel mit einem Anschlussstecker umfassen, der mit einer Netzsteckdose eines elektrischen Stromnetzes oder mit einem Verlängerungskabel verbindbar ist.

Um die Nutzungsmöglichkeiten der tragbaren Schweißvorrichtung zu erweitern, kann in einer bevorzugten Ausführungsform vorgesehen sein, dass die Schweißvorrichtung mindestens eine elektrische Anschlusssteckdose umfasst, die am Gehäuse angebracht oder innerhalb des Gehäuses untergebracht ist und an die ein mit elektrischem Strom betreibbares Gerät oder Werkzeug anschließbar ist. Vorzugsweise ist die elektrische Anschlusssteckdose in die Außenwandung des Gehäuses integriert, damit sie für einen Nutzer einfach und schnell erreichbar ist. Optional können auch mehrere elektrische Anschlusssteckdosen in die Außenwandung des Gehäuses integriert sein. Des Weiteren kann auch mindestens eine

Anschlusssteckdose im Inneren des Gehäuses der tragbaren Schweißvorrichtung vorgesehen sein. Die tragbare Schweißvorrichtung bildet in dieser Ausführungsform eine Art "Schnittstelle", an die andere elektrisch betreibbare Geräte (zum Beispiel eine Leuchte zum Ausleuchten der Arbeitsumgebung) beziehungsweise Werkzeuge, wie zum Beispiel eine Winkelschleifvorrichtung oder eine Bohrvorrichtung, auf einfache Weise angeschlossen und mit elektrischem Strom gespeist werden können. Während des Betriebs steht in vorteilhafter Weise also mindestens eine Anschlusssteckdose in Reichweite des Benutzers zur Verfügung.

In einer besonders vorteilhaften Ausführungsform besteht die Möglichkeit, dass die Stromversorgungseinrichtung mindestens ein aufladbares Akkumulatormittel umfasst, mittels dessen die Schweißeinheit mit elektrischem Strom gespeist werden kann. Durch diese Maßnahme kann ein kabelloser (autarker) Betrieb der Schweißvorrichtung ermöglicht werden, so dass der Aktionsradius während des Betriebs der Schweißvorrichtung vergrößert werden kann. Lediglich zum Aufladen des Akkumulatormittels muss die Schweißvorrichtung an eine Netzsteckdose angeschlossen werden. Vorzugsweise ist das mindestens eine Akkumulatormittel so ausgebildet und leistungsmäßig so dimensioniert, dass auch weitere, an die optional vorhandene(n) elektrische(n) Anschlusssteckdose(n) angeschlossene elektrische Geräte oder Werkzeuge mit elektrischem Strom gespeist werden können.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine perspektivische Ansicht einer tragbaren Schweißvorrichtung gemäß einem ersten Ausführungsbeispiel der vorliegenden Erfindung,
- Fig. 2: eine perspektivische Ansicht einer tragbaren Schweißvorrichtung gemäß einem zweiten Ausführungsbeispiel der vorliegenden Erfindung.

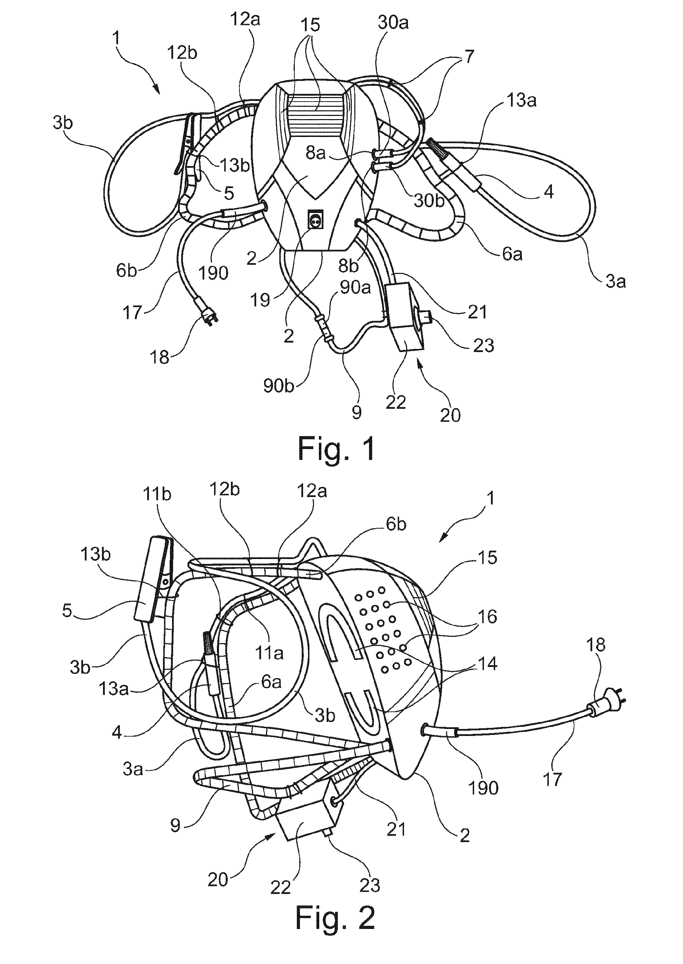

Unter Bezugnahme auf Fig. 1 und 2 umfasst eine tragbare Schweißvorrichtung 1 ein Gehäuse 2, innerhalb dessen eine hier nicht explizit dargestellte, zur Durchführung eines Lichtbogenschweißverfahrens eingerichtete Schweißeinheit untergebracht ist. Das Gehäuse 2 kann zum Beispiel aus einem Kunststoffmaterial hergestellt sein, um eine hohe Gehäusestabilität zu erreichen. Vorzugsweise ist dieses Kunststoffmaterial schlagfest, um auf diese Weise zu verhindern, dass das Gehäuse 2 zum Beispiel bei einem Sturz, Stoß oder einer sonstigen äußeren Schlageinwirkung sofort beschädigt wird. Es soll an dieser Stelle angemerkt werden, dass das Gehäuse 2 auch aus anderen Werkstoffen hergestellt sein kann.

Ferner umfasst die Schweißvorrichtung 1 ein erstes Schweißkabel 3a und ein zweites Schweißkabel 3b, die an die innerhalb des Gehäuses 2 untergebrachte Schweißeinheit angeschlossen oder manuell lösbar anschließbar sind, wobei an dem ersten Schweißkabel 3a ein Elektrodenhaltemittel 4 zum Halten einer Schweißelektrode angebracht ist und an dem zweiten Schweißkabel 3b ein Masseanschlussmittel 5, das vorliegend als Masseanschlusszange ausgebildet ist, angebracht ist. In den beiden hier gezeigten Ausführungsbeispielen, die tragbare Schweißvorrichtungen 1 mit einem nahezu identischen Aufbau zeigen, sind an einer Außenseite des Gehäuses 2 eine erste Anschlussbuchse 8a und eine zweite Anschlussbuchse 8b ausgebildet, die sich durch eine Außenwandung des Gehäuses 2 erstrecken und elektrisch an die im Inneren des Gehäuses 2 untergebrachte Schweißeinheit angeschlossen sind. Das erste Schweißkabel 3a weist an seinem freien Ende einen Anschlussstecker 30a auf, der mit der ersten Anschlussbuchse 8a in der Außenwandung des Gehäuses 2 verbindbar ist. Das zweite Schweißkabel 3b weist an seinem freien Ende ebenfalls einen Anschlussstecker 30b auf, der mit der zweiten Anschlussbuchse 8b in der Außenwandung des Gehäuses 2 verbindbar ist. Dadurch ist es auf einfache Weise möglich, die Schweißkabel 3a, 3b an die Anschlussbuchsen 8a, 8b (und damit auch an die Schweißeinheit) anzuschließen. Insbesondere im Falle eines Defekts ist es auf einfache Weise möglich, die beiden Schweißkabel 3a, 3b von den Anschlussbuchsen 8a, 8b wieder zu lösen und gegebenenfals auszutauschen. Die Schweißkabel 3a, 3b werden vorzugsweise durch zwei voneinander beabstandete Kabelverbindungsmittel 7 miteinander verbunden.

Am Gehäuse 2 sind - jeweils an zwei voneinander beabstandeten Anbindungspunkten - ein erster Schultertragriemen 6a und ein zweiter Schultertragriemen 6b befestigt, die so ausgebildet sind, dass ein Nutzer das Gehäuse 2 der tragbaren Schweißvorrichtung 1 auf einfache Weise auf seinen Rücken schnallen kann und mit der Schweißvorrichtung 1 auf dem Rücken mit dieser arbeiten kann. Vorzugsweise sind die beiden Schultertragriemen 6a, 6b längenverstellbar ausgeführt, so dass deren Längen auf einfache Weise nutzerspezifisch angepasst werden können. Um die Ergonomie weiter zu verbessern, ist in den beiden hier gezeigten Ausführungsbeispielen am Gehäuse 2 ein Bauchgurt 9 vorgesehen, der sich in einem unteren Bereich des Gehäuses 2 quer zu den beiden Schultertragriemen 6a, 6b erstreckt und an zwei Anbindungspunkten mit dem Gehäuse 2 verbunden ist. Zum einfachen Anlegen und Ablegen des Bauchgurts 9 weist dieser vorzugsweise zwei selektiv voneinander lösbare und miteinander verbindbare Schnallenteile 90a, 90b auf, die zwei freie Enden des Bauchgurts 9 auf einfach handhabbare Weise miteinander verbinden können. Vorzugsweise ist der Bauchgurt 9 ebenfalls längenverstellbar ausgeführt, so dass dessen Länge auf einfache Weise nutzerspezifisch angepasst werden kann.

An jedem der beiden Schultertragriemen 6a, 6b sind in beiden hier gezeigten Ausführungsbeispielen jeweils zwei voneinander beabstandete Schweißkabelführungsmittel 11 a, 11 b, 12a, 12b vorgesehen, die zum Beispiel ösenartig oder auch hakenartig ausgebildet sein können. Durch die beiden Schweißkabelführungsmittel 11a, 11b des ersten Schultertragriemens 6a kann das erste Schweißkabel 3a geführt werden. Entsprechend kann das zweite Schweißkabel 3b durch die beiden Schweißkabelführungsmittel 12a, 12b des zweiten Schultertragriemens 6b geführt werden. Die Schweißkabelführungsmittel 11 a, 11 b, 12a, 12b sind insbesondere dazu in der Lage, die Handhabung der Schweißvorrichtung 1 zu vereinfachen, da die beiden Schweißkabel 3a, 3b geordnet und sicher geführt und gehalten werden können und nicht etwa vom Gehäuse 2 der Schweißvorrichtung 1 herunterhängen und unter Umständen den Bewegungsspielraum des Nutzer einschränken können.

Am ersten Schultertragriemen 6a ist ferner ein Befestigungsmittel 13a angebracht, an dem das Elektrodenhaltemittel 4 bei einem Nichtgebrauch lösbar befestigt werden kann. Das Befestigungsmittel 13a kann zum Beispiel ösenartig ausgebildet sein, so dass das Elektrodenhaltemittel 4 bei einem Nichtgebrauch auf einfache Weise in das Befestigungsmittel 13a eingehängt werden kann. Am zweiten Schultertragriemen 6b ist vorzugsweise ebenfalls ein Befestigungsmittel 13b angebracht, an dem das Masseanschlussmittel 5 bei einem Nichtgebrauch lösbar befestigt werden kann. Das Befestigungsmittel 13b kann zum Beispiel ebenfalls ösenartig ausgebildet sein, so dass das Masseanschlussmittel 5 bei einem Nichtgebrauch auf einfache Weise in das Haltemittel 13b eingehängt werden kann.

Um den Tragekomfort während des Betriebs der Schweißvorrichtung 1 zu erhöhen, sind an einer dem Rücken des Benutzers während des Betriebs zugewandten Seite des Gehäuses 2 ein oder mehrere Rückenpolstermittel 14 vorgesehen. Um eine ausreichende Lüftung beziehungsweise Kühlung der innerhalb des Gehäuses 2 untergebrachten Schweißeinheit zu bewirken, weist das Gehäuse 2 vorzugsweise eine Anzahl von Lüftungsschlitzen 15 auf. Gemäß der in Fig. 2 gezeigten Variante der Schweißvorrichtung 1 kann das Gehäuse 2 zusätzlich zu den Lüftungsschlitzen 15 darüber hinaus noch eine Vielzahl von Lüftungsöffnungen 16 umfassen. Die Anzahl und/oder Positionen der Lüftungsschlitze 15 und/oder der Lüftungsöffnungen 16, die in der Außenwandung des Gehäuses 2 ausgebildet sind, kann/können von einem Fachmann so gewählt werden, dass eine ausreichende Kühlung/Lüftung der Schweißeinheit erreicht werden kann. Es kann gemäß einer weiteren Ausführungsform zum Beispiel auch vorgesehen sein, dass das Gehäuse 2 keinerlei Lüftungsschlitze 15, sondern ausschließlich eine Vielzahl von Lüftungsöffnungen 16 aufweist.

Um die Schweißvorrichtung 1 an eine externe Stromversorgungseinrichtung, insbesondere an eine herkömmliche Netzsteckdose eines Stromnetzes, anschließen zu können, umfasst die Schweißvorrichtung 1 ferner ein Stromanschlusskabel 17 mit einem Anschlussstecker 18. Das Stromanschlusskabel 17 ist durch eine Kabeldurchführung 190 hindurchgeführt, die in der Außenwandung des Gehäuses 2 ausgebildet ist, und an die Schweißeinheit angeschlossen. Der Anschlussstecker 18 des Stromanschlusskabels 17 kann zur Inbetriebnahme der Schweißeinheit mit der Anschlussbuchse eines hier nicht explizit dargestellten Verlängerungskabels verbunden werden, welches seinerseits mit der externen Stromversorgung, insbesondere mit einer Netzsteckdose, verbunden werden kann. Wie in Fig. 1 und 2 zu erkennen, ist das Stromanschlusskabel 17 - verglichen mit der Größe des Gehäuses 2 - relativ kurz ausgeführt. Um auf ein zusätzliches Verlängerungskabel verzichten zu können, besteht auch die Möglichkeit, ein längeres Stromanschlusskabel 17 zu verwenden, dessen Anschlussstecker 18 direkt mit der Anschlussbuchse der Stromversorgungseinrichtung, insbesondere mit einer Netzsteckdose, verbunden werden kann. Denkbar ist zum Beispiel auch, dass mindestens ein Kabelaufwicklungsmittel, insbesondere eine Kabelrolle oder dergleichen, vorgesehen ist, das außen am Gehäuse 2 der Schweißvorrichtung 1 angebracht ist oder innerhalb des Gehäuses 2 untergebracht ist. Auf dieses Kabelaufwicklungsmittel kann das Stromanschlusskabel 17 bei einem Nichtgebrauch aufgewickelt werden. Wenn die Schweißvorrichtung 1 betriebsbereit gemacht werden soll, kann das Stromanschlusskabel 17 abgewickelt werden und der Anschlussstecker 18 kann mit der Stromversorgungseinrichtung, insbesondere mit einer Netzsteckdose, verbunden werden.

In dem hier gezeigten Ausführungsbeispiel ist in der Außenwandung des Gehäuses 2 darüber hinaus eine elektrische Anschlusssteckdose 19 vorgesehen, die elektrisch mit dem Stromanschlusskabel 17 verbunden ist und in die bei Bedarf ein Anschlussstecker eines weiteren elektrisch betreibbaren Geräts (zum Beispiel einer Leuchte zum Ausleuchten der Arbeitsumgebung) oder eines Werkzeugs (zum Beispiel einer Winkelschleifvorrichtung oder einer Bohrvorrichtung) angeschlossen werden kann. Um mehr als ein weiteres elektrisch betreibbares Gerät oder Werkzeug anschließen zu können, besteht auch die Möglichkeit, dass mehr als eine elektrische Anschlusssteckdose 19 vorgesehen ist. Es ist zudem auch möglich, innerhalb des Gehäuses 2 eine oder mehrere Anschlusssteckdose 19 unterzubringen.

Gemäß einer alternativen Ausführungsform kann die Schweißvorrichtung 1 mindestens ein aufladbares Akkumulatormittel umfassen, welches eine Stromversorgungseinrichtung bildet, mittels derer die Schweißeinheit und gegebenenfalls weitere, an die optional vorhandene elektrische Anschlusssteckdose 19 angeschlossene elektrische Geräte oder Werkzeuge mit elektrischem Strom gespeist werden können.

Um die Bedienung der Schweißvorrichtung 1 weiter vereinfachen zu können, ist ferner ein kabelgebundenes Bedienteil 20 vorgesehen, das mittels eines Anschlusskabels 21 an die Schweißeinheit angeschlossen ist. Das Bedienteil 20 weist ein kastenförmiges Gehäuse 22 auf, das vorzugsweise am Bauchgurt 9 befestigt (oder befestigbar) ist, und umfasst mindestens ein Einstellmittel 23, insbesondere ein Potentiometer, vermittels dessen die Stromstärke (oder ein anderer einstellbarer Betriebsparameter der Schweißeinheit) während des Betriebs der Schweißeinheit auf einfache Weise und ohne unmittelbare Bedienung an der Schweißeinheit eingestellt und an die jeweiligen Gegebenheiten des Schweißprozesses angepasst werden kann. Das Bedienteil 20 kann wahlweise weitere Einstellmittel umfassen, mittels derer weitere Betriebsparameter der Schweißeinheit eingestellt werden können. Des Weiteren kann das Bedienteil 20 zum Beispiel auch ein Schaltermittel umfassen, das so ausgebildet ist, dass die Schweißeinheit durch Betätigen des Schaltermittels einbeziehungsweise wieder ausgeschaltet werden kann. Ferner besteht die Möglichkeit, dass das Bedienteil 20 (mindestens) ein zusätzliches Schaltermittel aufweist, welches dazu eingerichtet ist, die optional vorhandene elektrische Anschlusssteckdose 19 zu aktivieren beziehungsweise zu deaktivieren.

## Patentansprüche

1. Tragbare Schweißvorrichtung (1), umfassend
- ein Gehäuse (2),
- eine Schweißeinheit, die innerhalb des Gehäuses (2) untergebracht ist,
- ein erstes Schweißkabel (3a) und ein zweites Schweißkabel (3b), die mit der Schweißeinheit verbunden oder manuell lösbar verbindbar sind, wobei an dem ersten Schweißkabel (3a) ein Elektrodenhaltemittel (4) zum Halten einer Schweißelektrode angebracht ist und an dem zweiten Schweißkabel (3b) ein Masseanschlussmittel (5), insbesondere eine Masseverbindungszange, angebracht ist,
- Anschlussmittel zum Anschluss der Schweißeinheit an eine Stromversorgungseinrichtung und/oder an ein Stromnetz,
- einen ersten Schultertragriemen (6a), der an zwei voneinander beabstandeten Anbindungspunkten mit dem Gehäuse (2) verbunden ist, sowie
- einen zweiten Schultertragriemen (6b), der an zwei voneinander beabstandeten Anbindungspunkten mit dem Gehäuse (2) verbunden ist.

2. Tragbare Schweißvorrichtung (1) nach Anspruch 1 , **dadurch gekennzeichnet, dass** die beiden Schultertragriemen (6a, 6b) längenverstellbar ausgebildet sind.

3. Tragbare Schweißvorrichtung (1) nach Anspruch 1 oder 2,
**dadurch gekennzeichnet, dass** die Schweißvorrichtung (1) einen Bauchgurt (9) umfasst, der sich in einem unteren Bereich des Gehäuses (2) quer zu den beiden Schultertragriemen (6a, 6b) erstreckt und an zwei Anbindungspunkten mit dem Gehäuse (2) verbunden ist.

4. Tragbare Schweißvorrichtung (1) nach einem der Ansprüche 1 bis 3, **dadurch gekennzeichnet, dass** an zumindest einem Schultertragriemen (6a, 6b), vorzugsweise an jedem der beiden Schultertragriemen (6a, 6b), zumindest ein Schweißkabelführungsmittel (11 a, 11 b, 12a, 12b) angebracht ist.

5. Tragbare Schweißvorrichtung (1) nach Anspruch 4, **dadurch gekennzeichnet, dass** die Schweißkabelführungsmittel (11a, 1 1 b, 12a, 12b) ösenartig oder hakenartig ausgebildet sind.

6. Tragbare Schweißvorrichtung (1) nach einem der Ansprüche 1 bis 5, **dadurch gekennzeichnet, dass** am ersten Schultertragriemen (6a) ein Befestigungsmittel (13a) angebracht ist, an dem das Elektrodenhaltemittel (4) bei einem Nichtgebrauch lösbar befestigbar ist, und/oder dass am zweiten Schultertragriemen (6b) ein Befestigungsmittel (13b) angebracht ist, an dem das Masseanschlussmittel (5) bei einem Nichtgebrauch lösbar befestigbar ist.

7. Tragbare Schweißvorrichtung (1) nach einem der Ansprüche 1 bis 6, **dadurch gekennzeichnet, dass** die Schweißvorrichtung (1) ein Bedienteil (20) umfasst, das mittels eines Anschlusskabels (21) an der Schweißeinheit angeschlossen ist und mindestens ein Einstellmittel (23), insbesondere ein Potentiometer, aufweist, vermittels dessen während des Betriebs der Schweißeinheit zumindest ein Betriebsparameter, insbesondere eine Schweißspannung und/oder eine Stromstärke, einstellbar ist.

8. Tragbare Schweißvorrichtung (1) nach einem der Ansprüche 1 bis 7, **dadurch gekennzeichnet, dass** die Anschlussmittel ein Stromanschlusskabel (17) mit einem Anschlussstecker (18) umfassen, der mit einer Netzsteckdose eines elektrischen Stromnetzes verbindbar ist.

9. Tragbare Schweißvorrichtung (1) nach einem der Ansprüche 1 bis 8, **dadurch gekennzeichnet, dass** die Schweißvorrichtung (1) mindestens eine elektrische Anschlusssteckdose (19) umfasst, die am Gehäuse (2) angebracht oder innerhalb des Gehäuses (2) untergebracht ist und an die ein mit elektrischem Strom betreibbares Gerät oder Werkzeug anschließbar ist.

10. Tragbare Schweißvorrichtung (1) nach einem der Ansprüche 1 bis 9, **dadurch gekennzeichnet, dass** die Stromversorgungseinrichtung ein aufladbares Akkumulatormittel umfasst, mittels dessen die Schweißeinheit gespeist werden kann und die vorzugsweise innerhalb des Gehäuses (2) untergebracht ist.
